# NOUVEAU FASCICULE DE BREVET EUROPEEN

(11) **EP 0 236 645 B2**
(45) Date de publication et mention de la décision concernant l'opposition: **10.02.1999**
(45) Mention de la délivrance du brevet: 27.09.1989
(21) Numéro de dépôt: 86402773.5
(22) Date de dépôt: 11.12.1986
(51) Int. Cl.: B29C 47/06, B29C 47/28

(54) **Appareillage et procédé pour l'extrusion de tubes plastiques à parois composites**
Vorrichtung und Verfahren zum Extrudieren von Kunststoffrohren mit mehrschichtigen Wänden
Apparatus for and method of extruding plastics tubes having multilayered walls

(30) Priorité: 18.12.1985 FR 8518800
(43) Date de publication de la demande: 16.09.1987
(73) Titulaire: SOCIETE ALPHACAN, 78170 La Celle Saint-Cloud (FR)
(72) Inventeur: Prevotat, Bernard, F-78510 Le Chesnay (FR)
(74) Mandataire: Foiret, Claude Serge

(56) Documents cités:
- EP-A- 19 564
- FR-A- 2 306 819
- FR-A- 2 314 048
- GB-A- 2 048 155
- US-A- 3 756 758
- US-A- 4 281 981
- COEX '83, October 3-4, 1983, Düsseldorf, Schotland business research, inc., pages 225-236
- "Blasfolienextrusion - Coextrusion und Automatisierung", J. Wortberg, Kunststoffe 75 (1985)9, pages 584-589

## Description

La présente invention concerne un appareillage et un procédé pour l'extrusion de tubes plastiques à parois composites.

On utilise couramment des tubes plastiques dans les canalisations en raison de leur légèreté, de leur facilité de pose et de raccordement, de leur résistance à la corrosion. Il est maintenant courant que ces tubes soient à structure composite formée de trois couches, deux couches formant les parois externe et interne, la couche intermédiaire ou âme étant de nature identique ou différente des parois et très souvent allégée. De tels matériaux sont fabriqués habituellement par co-extrusion.

Un appareillage et un procédé performant permettant de réaliser de tels tubes composites sont décrits dans le brevet français 2.455.972. L'appareillage selon ce brevet est constitué d'une tête de répartition, chauffée et régulée, alimentée d'une part, par une première extrudeuse qui introduit la matière constituant les parois et, d'autre part, par une seconde extrudeuse que introduit la matière constituant l'âme du tube. Cette tête de répartition possède un moyen de séparation en deux veines d'écoulement distinctes de la matière constituant les deux parois. Entre ces deux veines existe un moyen d'introduction de la matière constituant l'âme en troisième veine. Les trois veines réunies sont, avant de passer dans la filière, passées sur un cône divergent disposé à la sortie de la tête de répartition.

Selon cet appareillage, une des extrudeuses alimente de façon classique axisymètrique la tête de répartition. Une telle alimentation nécessite l'utilisation d'un premier jeu d'ailettes, coupant le flux de matières fondues, pour maintenir le coeur métallique de la tête de répartition à l'ensemble de l'appareillage. De même, le cône divergent nécessite en sa plus grande partie l'existence d'un second jeu d'ailettes permettant de le fixer à l'ensemble de l'appareillage. Dans ces types d'appareillage, au moins trois ailettes maintiennent le coeur de répartition et au moins quatre maintiennent le cône de sortie divergent. Ces deux jeux d'ailettes, qui coupent le flux de matières fondues, sont particulièrement gênantes en ce que d'un part, elles laissent plus ou moins de traces rectilignes sur le matériau final, et que, d'autre part, pour atténuer ces traces en permettant la soudure le plus nette possible des produits fondus après la coupure, il est nécessaire d'avoir une distance suffisante entre les dernières ailettes et la fière ce que entraîne l'obligation d'utiliser un matériel long'et volumineux.

Afin de réaliser des films multicouches un système complexe a été proposé dans le brevet des Etats-Unis d'Amérique 3.756.758 consistant à alimenter axidissymétriquement des canaux parallèles aboutissant à des sortes de distributeurs de chacun des flux avant la filière commune. Ces distributeurs de flux disposés perpendiculairement à l'axe de l'outillage comportent nécessairement, comme dans le cas du cône divergent de la technique précédente un jeu d'ailettes ce qui entraine les inconvénients signalés. Selon cette technique d'alimentation axidissymétrique, si on peut supprimer le premier jeu d'ailettes de la tête de répartition, il n'est pas possible de supprimer celui précédant la filière.

De cet art antérieur connu il n'est pas possible de réaliser des tubes multicouches par coextrusion de matières sans utiliser un outillage comportant au moins un eu d'ailettes coupant les flux de matières.

Dans "Proceedings of the Third Annual International Conference on Coextrusion Markets and Technology, Coex' 83 " (October 3-4, 1983) on décrit un appareillage destiné à la fabrication par extrusion de tubes plastique à structure composite, ledit appareillage comprenant une tête de répartition et un outillage d'extrusion, ladite tête de répartition étant divisée en trois canaux annulaires reliés chacun à une extrudeuse.

L'invention a pour objet un appareillage pour la fabrication par extrusion de tubes plastiques à structure composite constitué d'un ensemble tête de répartition - outillage d'extrusion comprenant la filière ainsi que le mandrin constitué de deux troncs de cône divergent et convergent, la tête de répartition étant divisée en trois canaux annulaires se réunissant sensiblement au niveau de l'outillage d'extrusion, les deux canaux, servant au passage de a matière constituant les parois du tube et encadrant le canal servant au passage de la matière constituant l'âme du tube, se réunissant en amont du répartiteur de flux dudit canal au canal d'alimentation relié à une première extrudeuse, ce dernier canal alimentant les répartiteurs de flux des canaux de passage de la matière des parois, le répartiteur de flux du canal de passage de la matière de l'âme étant alimenté par un canal d'alimentation relié à une seconde extrudeuse caractérisé en ce que les deux canaux d'alimentation des trois répartiteurs de flux sont disposés de façon axidissymétrique par rapport à l'axe de l'ensemble tête de répartition - outillage d'extrusion, en ce que l'ensemble forme un bloc unitaire avec exclusion de toute ailette accessoire de fixation coupant le flux de matière fondue et un ce que la pièce centrale de la tête de répartition sur laquelle se trouve le répartiteur de flux du canal annulaire pour le passage de la matière servant à former la paroi interne du tube est solidaire en amont dudit répartiteur de flux du bloc de l'ensemble des pièces représentant le corps externe de la tète de répartition, ladite pièce centrale étant fixée directement par l'arrière de l'outillage au corps d'une extrudeuse, le mandrin étant directement fixé à la pièce centrale.

Les figures annexées permettent d'expliciter l'appareillage.

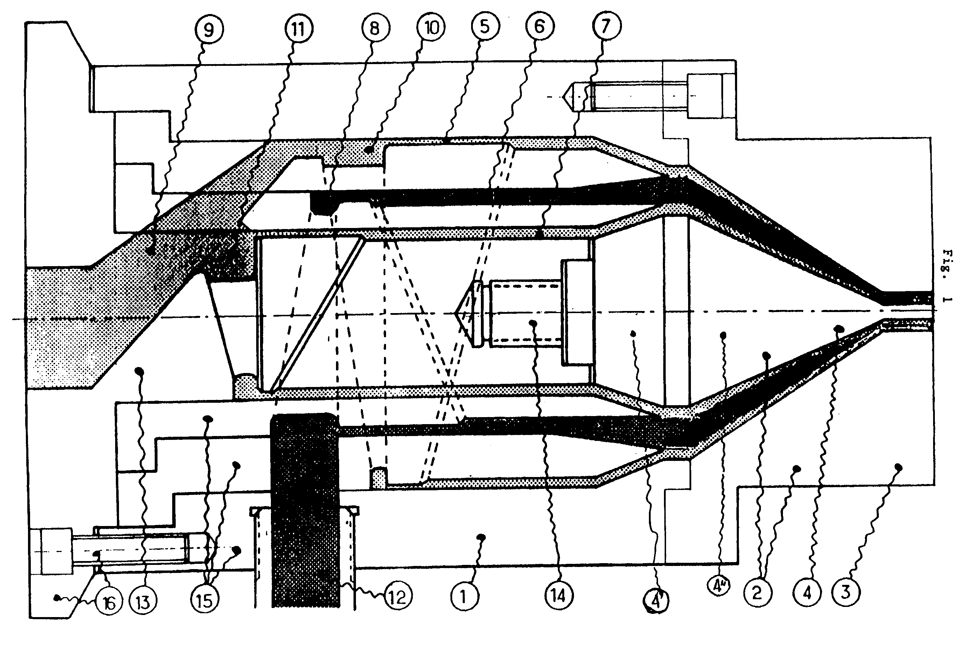

La figure 1 illustre une coupe de l'appareillage, selon l'invention, constitué de l'ensemble tête de répartition (1) - outillage d'extrusion (2) : filière (3) et mandrin (4). La tête de répartition est divisée en trois canaux annulaires (5), (6) et (7) se réunissant sensiblement au niveau de l'outillage d'extrusion (2). Les deux canaux (5) et (7), servant au passage de la matière constituant les parois du tube et encadrant le canal (6), servant au passage de la matière constituant l'âme, sont réunis en amont du répartiteur de flux (8) du canal (6) au canal d'alimentation (9). Ce canal (9) alimente les répartiteurs de flux (10) et (11) des canaux (5) et (7), le répartiteur de flux (8) étant alimenté par le canal (12). Selon cet appareillage les canaux d'alimentation (9) et (12) des répartiteurs de flux sont disposés axidissymétriquement par rapport à l'axe de l'ensemble tête de répartition - outillage d'extrusion. On entend par axidissymétrique toute disposition des canaux d'alimentation autre que symétrique par-rapport à l'axe de l'ensemble précité. Grâce à cette disposition axidissymétrique, la pièce centrale (13), représentant le corps interne de la tête de répartition, comportant : éventuellement un ou plusieurs canaux d'alimentation (9), le répartiteur de flux (11) et le moyen de fixation (14) de l'outillage d'extrusion est solidaire, en amont du répartiteur de flux (11) du canal interne (7), du bloc de l'ensemble de pièces (15) représentant le reste, ou corps externe, de la tête de répartition. Sur le moyen de fixation (14) est fixé le mandrin (4) constitué de deux troncs de cônes divergent (4') et convergent (4''). Grâce à cette structure du mandrin il est possible en jouant sur son volume de réduire la longueur de l'ensemble tête de répartition - outillage, ce qui, combiné à la disposition axidissymétrique des canaux d'alimentation des répartiteurs de flux permet d'une part la fixation de la pièce centrale (13) par l'arrière de l'outillage, par exemple par les moyens de fixation (16) au corps d'une extrudeuse et d'autre part, grâce à la rigidité et à la longueur réduite de l'ensemble, d'éviter la présence de toute ailette.

Il est bien entendu que dans la définition du mandrin est compris le poinçon de la filière.

Le moyen de fixation (14) de préférence réglable, et pouvant par exemple être constitué par une bague coulissante fixée à la pièce centrale, permet d'avancer ou de reculer le mandrin par rapport à la tête de répartition. Cette possibilité de réglage, en fonction de la géométrie du mandrin, permet de jouer sur les épaisseurs des différentes couches, et en particulier de la couche interne du tube par variation du diamètre du canal (7).

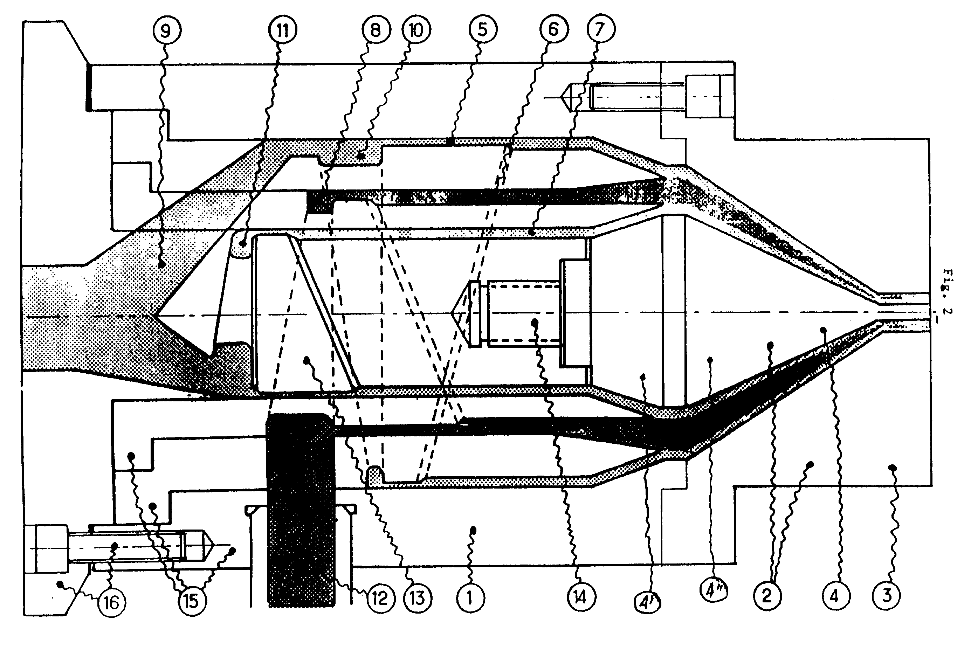

La figure 2, variante de la figure 1, illustre une disposition possible dans la pièce centrale (13) de plusieurs canaux, axidissymétriques par rapport à l'axe de la tête de répartition, d'alimentation (9) des répartiteurs de flux (10) et (11) des canaux servant au passage de la matière constituant les parois interne et externe du tube. Plus particulièrement, ce canal (9) divisé en deux dans la pièce centrale (13) alimente séparément les répartiteurs de flux (10) et (11).

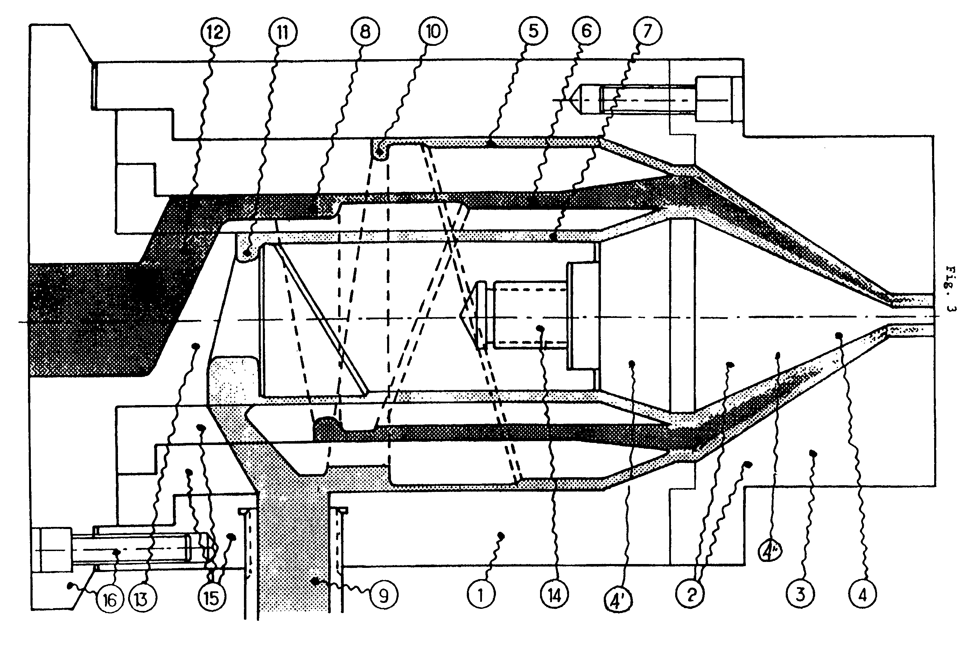

La figure 3, également variante de la figure 1, illustre une des nombreuses possibilités de disposition des canaux (9) et (12) d'alimentation des rèpartiteurs de flux des trois canaux annulaires (5), (6) et (7) sans qu'il soit nécessaire de les couper partiellement axialement par des ailettes de support.

L'appareillage selon l'invention permet la fabrication de tubes plastiques à parois composites. Le procédé consiste à introduire dans la tête de répartition, chauffée et régulée, la matière constituant les parois du tube, que l'on sépare en deux veines d'écoulement entre lesquelles on injecte une matière de remplissage, formant une troisième veine d'écoulement que l'on rapproche et met en contact avec les deux autres avant de les conformer définitivement dans une filière et éventuellement dans un conformateur.

L'appareillage convient pour toutes les matières plastiques extrudables en particulier le polychlorure de vinyle, les polyoléfines ou encore le polystyrène. Lorsque l'âme du tube fabriqué est constituée d'une matière plastique allégée, on choisit de préférence un matériau expansible compatible avec la matière constituant la paroi de façon à ce que s'établisse une adhérence suffisante entre les parois et l'âme pour assurer la cohésion du composite.

Pour changer les dimensions du tube, il suffit de changer d'outillage d'extrusion : filière et mandrin. Outre que le réglage des épaisseurs des parois interne et externe du tube puisse se faire, comme déjà indiqué, par action sur la position du mandrin, il est également possible de régler, de façon connue, les épaisseurs des parois et de l'âme en modulant les débits des extrudeuses l'une par rapport à l'autre.

Au moyen de cet appareillage sont réalisés des tubes possédant un excellent aspect de surface, toute trace laissée, selon les procédés antérieurs par les ailettes, étant supprimée.

## Revendications

1. Appareillage pour la fabrication par extrusion de tubes plastiques à structure composite constitué d'un ensemble tête de répartition (1) - outillage d'extrusion (2) comprenant la filière (3) ainsi que le mandrin (4) constitué de deux troncs de cône divergent (4') et convergent (4''), la tête de répartition étant divisée en trois canaux annulaires (5, 6, 7) se réunissant sensiblement au niveau de l'outillage d'extrusion, les deux canaux (5, 7), servant au passage de la matière constituant les parois du tube et encadrant le canal (6) servant au passage de la matière constituant l'âme du tube, se réunissant en amont du répartiteur de flux (8) dudit canal (6) au canal d'alimentation (9) relié à une première extrudeuse, ce dernier canal alimentant les répartiteurs de flux (10, 11) des canaux (5, 7) de passage de la matière des parois, le répartiteur de flux du canal (6) de passage de la matière de l'âme étant alimenté par un canal d'alimentation (12) relié à une seconde extrudeuse caractérisé en ce que les deux canaux d'alimentation des trois répartiteurs de flux sont disposés de façon axidissymétrique par rapport à l'axe de l'ensemble tête de répartition - outillage d'extrusion et en ce que l'ensemble forme un bloc unitaire avec exclusion de toute ailette accessoire de fixation coupant le flux de matière fondue et en ce que la pièce centrale (13) de la tête de répartition sur laquelle se trouve le répartiteur de flux (11) du canal annulaire (7) pour le passage de la matière servant à former la paroi interne du tube est solidaire en amont dudit répartiteur de flux (11) du bloc de l'ensemble des pièces (15) représentant le corps externe de la ,tête de répartition, ladite pièce centrale (13) étant fixée directement par l'arrière de l'outillage au corps d'une extrudeuse, le mandrin (4) étant directement fixé à la pièce centrale (13).

2. Appareillage selon la revendication 1 caractérisé en ce que la pièce centrale (13) sur laquelle se trouve le répartiteur de flux (11) du canal annulaire (7) pour le passage de la matière servant à former la paroi interne du tube est traversée par le canal (9) axidissymétrique d'alimentation dudit répartiteur.

3. Appareillage selon l'une des revendications 1 ou 2, caractérisé en ce que la pièce centrale (13) sur laquelle se trouve le répartiteur de flux (11) du canal annulaire (7) pour le passage de la matière servant à former la paroi interne du tube est traversée par le canal (9) divisé en deux pour alimenter séparément le répartiteur de flux (11) du canal annulaire pour le passage de la matière servant à former la paroi interne du tube, et le répartiteur de flux (10) du canal annulaire (5) pour le passage de la matière servant à former la paroi externe du tube.

4. Appareillage selon l'une quelconque des revendications 1 à 3, caractérisé en ce que le corps interne (13) de la tête de répartition possède dans une de ses extrémités et sensiblement dans l'axe, un moyen de fixation (14) comportant lui-même un moyen de réglage du mandrin de l'outillage d'extrusion.

## Claims

1. Equipment for manufacturing, by extrusion, plastic tubes with a composite structure, constituted by an assembly consisting of distribution head (1) and extrusion tool (2) comprising the die (3)and the mandrel (4) consisting of two truncated cones, divergent (4') and convergent (4''), the distribution head being divided into three annular channels (5, 6, 7) joining substantially at the extrusion tool, the two channels (5, 7), serving for the passage of the material forming the walls of the tube and flanking the channel (6) serving for the passage of the material forming the core of the tube, joining upstream of the distributor (8) of flow from the said channel (6) to the supply channel (9) connected to a first extruder, the latter channel feeding the flow distributors (10, 11) for the channels (5, 7) for the material of the walls to pass, the flow distributor for the channel (6) for the passage of the material of the core being fed by a feed channel (12) connected to a second extruder, characterised in that the two feed channels of the three flow distributors are disposed axiasymmetrically with respect to the axis of the distribution head and extrusion tool assembly, and in that the assembly forms a unitary block with the exclusion of any additional fixing fin cutting the flow of molten material, and in that the central piece (13) of the distribution head on which is situated the flow distributor (11) for the annular channel (7) for passage of the material serving to form the internal wall of the tube is fixed, upstream of the said flow distributor (11), to the block of all the pieces (15) representing the external body of the distribution head, the said central piece (13) being fixed directly by the rear of the tool to the body of an extruder, the mandrel (4) being directly fixed to the central piece (13).

2. Equipment according to Claim 1, characterised in that the central piece (13) on which is situated the flow distributor (11) for the annular channel (7) for the passage of material serving to form the internal wall of the tube has the axiasymmetrical channel (9) feeding the said distributor pass through it.

3. Equipment according to one of Claims 1 or 2, characterised in that the central piece (13) on which is situated the flow distributor (11) for the annular channel (7) for passage of material serving to form the internal wall of the tube has pass through it the channel (9) divided into two in order to supply separately the flow distributor (11) for the annular channel for passage of the material serving to form the internal wall of the tube, and the flow distributor (10) for the annular channel (5) for passage of the material serving to form the external wall of the tube.

4. Equipment according to any one of Claims 1 to 3, characterised in that the internal body (13) of the distribution head has, in one of its ends and substantially in the axis, a fixing means (14) itself having a means of adjusting the mandrel of the extrusion tool.

## Patentansprüche

1. Anlage zur Herstellung von Kunststoffrohren mit Verbundstruktur durch Strangpressen, bestehend aus einer Baueinheit Verteilerkopf (1) - Strangpreßwerkzeug (2), umfassend die Düse (3) sowie den Dorn (4), der aus zwei divergierenden (4') und konvergierenden (4'') Kegelstümpfen besteht, wobei der Verteilerkopf in drei ringförmige Kanäle (5, 6, 7) unterteilt ist, die sich im wesentlichen in Höhe des Strangpreßwerkzeuges vereinigen, wobei die beiden Kanäle (5, 7) dem Durchfluß des Materials, das die Wände des Rohrs bildet, dienen und den Kanal (6), der dem Durchfluß des Materials dient, das den Kern des Rohrs bildet, einrahmen, wobei diese sich im Strom oberhalb des Verteilers des Flusses (8) dieses Kanals (6) zu dem Zufuhrkanal (9) vereinigen, der mit einer ersten Strangpresse verbunden ist, wobei dieser letzte Kanal die Flußverteiler (10, 11) der Kanäle (5, 7) für den Durchgang des Materials für die Wände speist, wobei der Flußverteiler des Kanals (6) für den Durchgang des Materials für den Kern durch einen Versorgungskanal (12) gespeist wird, der mit einer zweiten Strangpresse verbunden ist, dadurch gekennzeichnet, daß die zwei Versorgungskanäle der Flußverteilerachsen dissymmetrisch in bezug auf die Achse der Baueinheit Verteilerkopf-Strangpreßwerkzeug angeordnet sind und daß das Ganze einen einzigen Block bildet mit Ausschluß von jeder zusätzlichen Befestigungsrippe, die den Fluß des geschmolzenen Materials schneidet, und daß das Mittelstück (13) des Verteilerkopfes, an den sich der Flußverteiler (11) fuhr den Ringkanal (7) für den Durchgang desjenigen Materials befindet, das zur Bildung der inneren Wandung des Rohrs dient, im Strom oberhalb dieses Flußverteilers (11) fest mit dem Block der Baueinheit der Teile (15) verbunden ist, die den äußeren Körper des Verteilungskopfes bilden, wobei das Mittelstuck (13) direkt über die Hinterseite des Werkzeugs an dem Körper einer Strangpresse befestigt ist, wobei der Dorn (4) direkt an dem Mittelstück (13) befestigt ist.

2. Anlage nach Anspruch 1, dadurch gekennzeichnet, daß das Mittelstück (13), an dem sich der Flußverteiler (11) des Ringkanals (7) für den Durchgang desjenigen Materials, das zur Bildung der inneren Wand des Rohrs dient, befindet von dem achsendissymmetrischen Kanal (9) zur Versorgung dieses Verteilers durchquert wird.

3. Anlage nach Anspruch 1 oder 2, dadurch gekennzeichnet, daß das Mittelstück (13) an dem sich der Flußverteiler (11) des Ringkanals (7) für den Durchgang des Materials befindet, das zur Bildung der Innenwand des Rohrs dient, von dem Kanal (9) durchquert wird, der zweigeteilt ist, um getrennt voneinander den Flußverteiler (11) des Ringkanals für den Durchgang des Materials, das zur Bildung der Innenwand des Rohrs dient, und den Flußverteiler (10) des Fingkanals (5) für den Durchgang des Materials, das zur Bildung der Außenwand des Rohrs dient, zu speisen.

4. Anlage nach einem der Ansprüche 1 bis 3, dadurch gekennzeichnet, daß der innere Körper (13) des Verteilerkopfes an einem seiner Enden und im wesentlichen in der Achse ein Befestigungsmittel (14) aufweist, das selbst ein Mittel zur Regelung des Dorns des Strangpreßwerkzeugs umfaßt.
